# EUROPÄISCHE PATENTANMELDUNG

(11) **EP 1 076 227 A1**
(43) Veröffentlichungstag der Anmeldung: **14.02.2001**
(21) Anmeldenummer: 00810659.3
(22) Anmeldetag: 24.07.2000
(51) Int. Cl.: G01F 23/26

(54) **Kapazitiver Füllstandssensor mit dielektrischer Beschichtung**

(30) Priorität: 12.08.1999 DE 19938270
(71) Anmelder: ABB RESEARCH LTD., 8050 Zürich (CH)
(72) Erfinder: Byatt, John Anthony, 5313 Klingnau (CH); Jülke, Elias, 5430 Wettingen (CH); Kleiner, Thomas, 5415 Nussbaumen (CH); Matter, Daniel, 5200 Brugg (CH); Prêtre, Philippe, 5405 Baden-Dättwil (CH)
(74) Vertreter: ABB Patent Attorneys

(57) **Zusammenfassung**

Die vorliegende Erfindung offenbart einen kapazitiven Füllstandssensor (1), der besonders zur Füllstandsbestimmung in Ölseparatortanks (2) geeignet ist. Der Kapazitätssensor (1) umfasst eine Messsonde (5) mit mindestens einer Sensorelektrode (6). Erfindungsgemäss ist die Messsonde (5) wenigstens teilweise mit mindestens einer Aussenschicht (7a) aus einem fluorierten Kunststoff und mindestens einer Innenschicht (7b) aus einem glimmergefüllten Kunststoff ummantelt. Wichtige Ausführungsbeispiele betreffen eine Ausssenschicht aus Perfluorethylen-Perfluorpropylen Copolymer (FEP) (7a), eine Innenschicht aus glimmerbeschichtetem, mit Epoxidharz imprägniertem und u. U. silanisiertem Glasfaserband (7b) und eine inkompressible, thermisch angepasste Füllung des Messsondenrohrs (9) mit Silikonöl (11) und Glaskugeln oder Glaspolyedern (12) und/oder einem Innenstab aus AlMgSi-gefülltem Epoxidharz. Die Ummantelung (7a, 7b) ist elektrisch isolierend, chemisch inert, hydrophob, oleophob, wasserdicht, mechanisch robust und einfach herstellbar.

## Beschreibung

### TECHNISCHES GEBIET

Die vorliegende Erfindung bezieht sich auf das Gebiet der Füllstandsanzeigen. Sie geht aus von einer Vorrichtung und einem Verfahren zur Füllstandsmessung nach dem Oberbegriff der Ansprüche 1 und 10.

### STAND DER TECHNIK

Bei der Offshore-Erdölförderung werden Separationstanks eingesetzt, in welchen die auftretenden Phasen (Sand, Wasser, Öl und Gas) durch Segregation separiert und in getrennten Leitungssystemen abgeführt werden. Zur Steuerung der Auslassventile werden die Füllstände, insbesondere die Positionen der Grenzschichten zwischen Öl und Wasser, überwacht.

Neuerdings werden Hochdruck-Separationstanks entwickelt, die für den Betrieb auf dem Meeresboden einige 100 m unterhalb der Meeresoberfläche ausgelegt sind. Dadurch kann das Öl zuerst separiert und dann mit geringem Energieaufwand an die Meeresoberfläche gepumpt werden. Solche Separatortanks sind sehr hohen Drücken von 60 bar-180 bar und hohen Temperaturen von 50°C-120°C ausgesetzt. Ein Füllstandsmesssystem muss unter solchen schwierigen Bedingungen jahrelang wartungsfrei und zuverlässig funktionieren, um die Betriebssicherheit des Separatortanks zu gewährleisten.

Stand der Technik sind kapazitive Füllstandssensoren, die ins Füllgut eingetaucht werden und den Füllstand durch Änderungen der Dielektrizitätszahl und/oder der Leitfähigkeit des Füllguts detektieren. Hierbei sind vielfältige Elektrodenanordnungen bekannt. In der deutschen Patentanmeldung mit der Anmeldenummer DE 197 13 267.7 wird beispielsweise eine stabförmige geschlossene Messsonde mit mehreren, entlang einer Sondenachse angeordneten Ringelektroden verwendet.

Ein wesentliches Problem beim Einsatz kapazitiver Füllstandssensoren in Separatortanks besteht darin, dass Öl und Ölbestandteile sowie Prozess- und Salzwasser eine chemisch hochagressive und korrosive Umgebung für die Messsonde und besonders für die Elektroden darstellen. Für eine dielektrische Abschirmung potentiell geeignete Materialien wie Glas oder Keramik sind aber nur schwer oder mit grossem Aufwand in der gewünschten Form herstellbar.

### DARSTELLUNG DER ERFINDUNG

Die Erfindung stellt sich die Aufgabe, für einen kapazitiven Füllstandssensor eine verbesserte, langzeitstabile und einfach herstellbare dielektrische Schutzbeschichtung anzugeben. Diese Aufgabe wird erfindungsgemäss durch die Merkmale der Ansprüche 1 und 10 gelöst.

Erfindungsgemäss wird die Messsonde eines kapazitiven Füllstandssensors mit mindestens einer Sensorelektrode dadurch geschützt, dass die Messsonde wenigstens teilweise mit mindestens einer Aussenschicht aus einem fluorierten Kunststoff und mindestens einer Innenschicht aus einem glimmerenthaltenden Kunststoff ummantelt ist. Durch die Kombination der fluorierten mit der glimmergefüllten Schutzbeschichtung wird eine chemisch beständige und mechanisch robuste dielektrische Abdeckung mit einer stabilen, kleinen Dielektrizitätszahl geschaffen. Die Schutzbeschichtung ist in geringen Dicken (wenige mm) herstellbar und besonders zur Beschichtung langgestreckter Messsonden geeignet. Der fluorierte Kunststoff macht die Aussenschicht hydrophob und oleophob. Dadurch wird die Anhaftung von Wasser- und/oder Ölrückständen an der Messsonde verringert oder eliminiert und die Zuverlässigkeit der Kapazitätsmessung verbessert. Die Innenschicht stellt eine zusätzliche Diffusionsbarriere besonders für eindringendes Wasser dar. Dadurch ist die Konstanz der Dielektrizitätszahl der Beschichtung auch bei jahrelanger Exposition an Wasser gewährleistet.

In einem ersten Ausführungsbeispiel besteht die Aussenschicht aus einem thermoplastischen Kunststoff wie z. B. Perfluorethylen-Perfluorpropylen Copolymer (FEP). Aufgrund der Thermoplastizität kann die Aussenschicht auf einfache Weise auf die Messsonde aufgeschrumpft oder aufextrudiert werden.

In einem anderen Ausführungsbeispiel besteht die Innenschicht aus glimmerbeschichtetem, mit Epoxidharz imprägniertem und gegebenenfalls silanisiertem Glasfaserband. Dadurch wird eine besonders gute Wasserresistenz erzielt. Die Bandform gewährleistet eine einfache Herstellbarkeit der Innenschicht durch Wickeln in einer oder mehreren Lagen.

In einem weiteren Ausführungsbeispiel umfasst die Messsonde ein GFK-Rohr, das im Inneren Glaskugeln- oder polyeder und/oder einen Innenstab aus AlMgSi-gefülltem Epoxidharz und/oder Öl (z. B. Mineralöl oder Silikonöl) enthält. Die Füllung ist für hohe Drücke geeignet, da sie weitgehend inkompressibel und thermisch an das GFK-Rohr angepasst ist.

Weitere Ausführungen, Vorteile und Anwendungen der Erfindung ergeben sich aus den abhängigen Ansprüchen sowie aus der nun folgenden Beschreibung anhand der Figuren.

### KURZE BESCHREIBUNG DER ZEICHNUNG

Es zeigen:
- Fig. 1: einen kapazitiven Füllstandssensor mit Mehrelektroden-Messsonde und dielektrischer Abschirmung in einem Ölseparatortank;
- Fig. 2: einen erfindungsgemässen Zweischichten-Aufbau der dielektrischen Abschirmung (schichtweise aufgeschnittene Darstellung);
- Fig. 3: einen erfindungsgemässen Aufbau der Innenschicht der dielektrischen Abschirmung; und
- Fig. 4: einen Querschnitt durch ein erfindungsgemäss ausgestaltetes Messsondenende.

In den Figuren sind gleiche Teile mit gleichen Bezugszeichen versehen.

### WEGE ZUR AUSFÜHRUNG DER ERFINDUNG

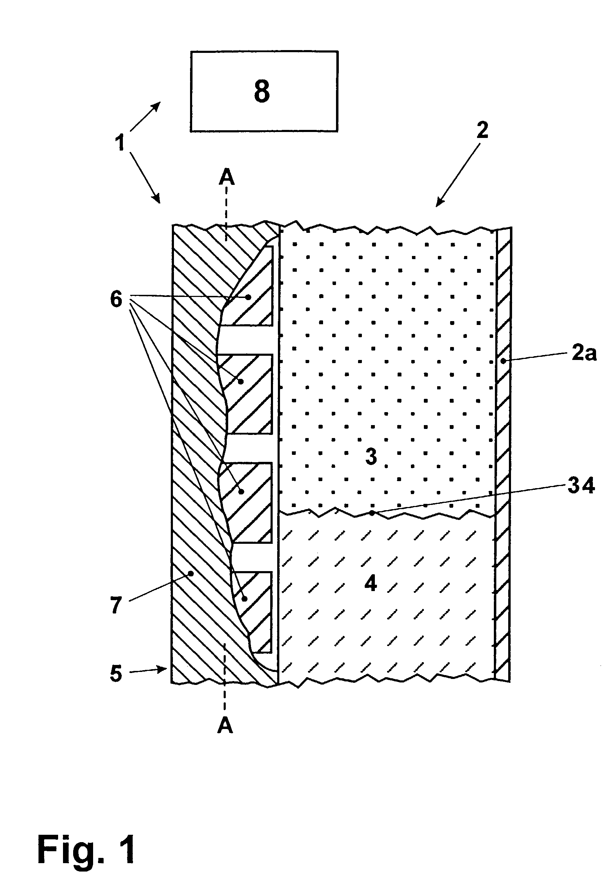

Die Erfindung hat gemäss Fig. 1-4 einen kapazitiven Füllstandssensor 1 zum Gegenstand, der insbesondere zur Ortsbestimmung einer Grenzschicht 34 zwischen Wasser 3 und Öl 4 in einem Separatortank 2 geeignet ist. Der Füllstandssensor 1 umfasst eine Messsonde 5 und eine Messelektronik 8. Die Messsonde 5 hat eine Elektrode oder eine Elektrodenanordnung 6 mit einer wenigstens teilweise bedeckenden elektrisch isolierenden Abdeckung 7, die erfindungsgemäss mindestens eine Aussenschicht 7a aus einem fluorierten Kunststoff und mindestens eine Innenschicht 7b aus einem glimmergefüllten Kunststoff aufweist. Insgesamt soll die dielektrische Abdeckung eine Dicke von ca. 1-3 mm und eine kleine Dielektrizitätzahl zwischen 2 und 7 aufweisen, um den Einfluss auf die Kapazitätsmesssignale gering zu halten. Im folgenden werden Ausführungsbeispiele angegeben.

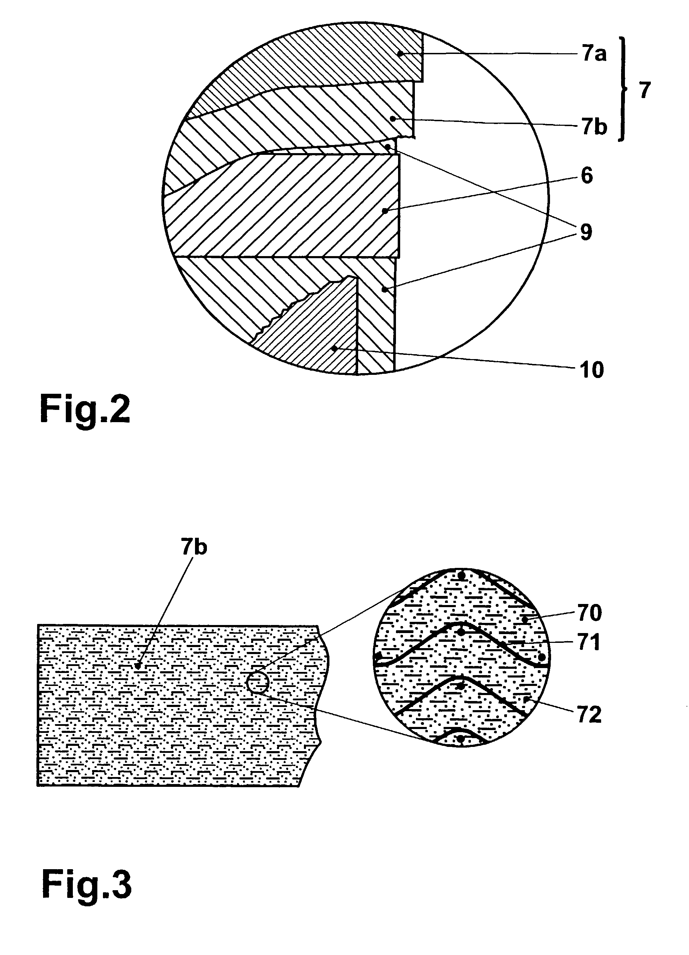

Die Aussenschicht 7a gemäss Fig. 2 besteht bevorzugt aus einem thermoplastischen Kunststoff, der auf die Messsonde 5 aufgeschrumpft oder aufextrudiert ist. Insbesondere besteht die Aussenschicht 7a aus einem Perfluorethylen-Perfluorpropylen Copolymer (=Tetrafluorethylen-Hexafluorpropylen Copolymer, FEP).

Fig. 3 zeigt einen bevorzugten Aufbau der Innenschicht 7b. Die Innenschicht 7b weist zur Verbesserung der mechanischen Eigenschaften eine Glasfaserverstärkung auf. Die Glasfaserverstärkung bewirkt auch eine verbesserte Ausrichtung der Glimmerplättchen parallel zur Oberfläche der Messsonde 5 und folglich eine Verlängerung der Diffusionswege für eindringendes Wasser senkrecht zur Oberfläche. Insbesondere enthält die Innenschicht 7b 15%-20% Glasfaser 71, 50%-60% Glimmerpapier 70 und 20%-35% Epoxidharz 72. Glimmerpapiere 70 sind nach dem Romica- oder Samicaverfahren herstellbar. Samicapapiere 70 sind als möglichst diffusionsdichte Barriere und wegen der besseren dielektrischen Eigenschaften besonders geeignet. Sie sind als wikkelfähige Bänder auf der Basis von Glasgewebe (Glimmerpapier aufgeklebt auf Glasgewebe) oder glasgewebefrei (Glimmerpapier Epoxidharz-imprägniert und mehrfachgeschichtet) verwendbar. Die Wasserresistenz der Innenschicht 7b kann ferner dadurch verbessert werden, das als Epoxidharz 72 ein cycloaliphatisches Epoxidharz mit wasserfreiem Härter verwendet wird.

Mit Vorteil ist die Innenschicht 7b aus einem glimmerbeschichteten Glasfaserband aufgebaut, das auf die Messsonde 5 in einer oder mehreren Lagen aufgewickelt ist. Die Innenschicht 7b ist mit dem Epoxidharz 72 imprägniert, vorzugsweise vakuumvergossen oder druckvergossen, und gehärtet. Zudem kann die Innenschicht 7b von aussen silanisiert sein (nicht dargestellt). Dadurch wird ein Anstieg der Oberflächenleitfähigkeit durch Bildung monomolekularer Wasserfilme verhindert. Alternativ oder ergänzend kann zwischen Innenschicht 7b und Aussenschicht 7a eine Ölschicht eingeführt werden, um Restwasser und Restfeuchtigkeit zu vertreiben.

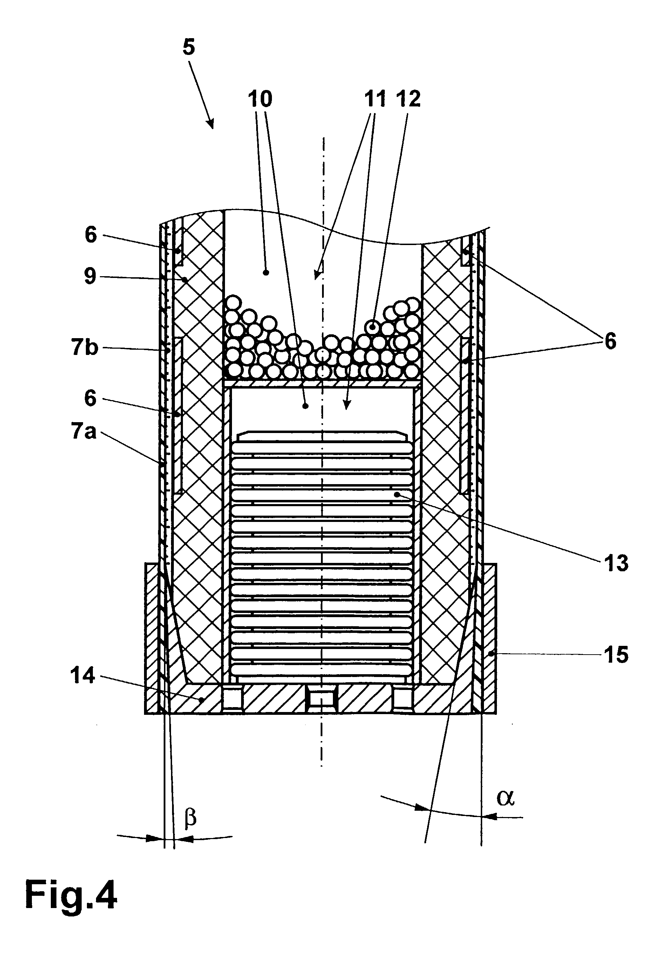

Der weitere Aufbau der Messsonde 5 ist aus Fig. 4 ersichtlich. Die Messsonde 5 umfasst ein GFK-Rohr 9 mit aussen aufgebrachten Elektroden 6 und mit einem inneren Druckausgleichsvolumen 10, das mit Kugeln oder Polyedern 12 und/ oder einem Innenstab (nicht dargestellt), vorzugsweise aus AlMgSi-gefülltem Epoxidharz oder einer Glaskeramik (z. B. Macor von Corning Inc.), und/oder Öl (z. B. Mineralöl oder Silikonöl) 11 gefüllt ist. Durch die inkompressible, durch Öl 11 ergänzte Füllung kann ein den Aussendruck kompensierender Innendruck aufgebaut und das Eindringen von Feuchtigkeit verhindert oder retardiert werden. Die Füllung ist dabei so ausgelegt, dass ihr thermischer Ausdehnungskoeffizient möglichst dem des GFK-Rohrs 9 nahekommt. Zusätzlich kann endseitig am GFK-Rohr 9 ein Faltenbalg 13 zum Druckausgleich angebracht sein.

Die Kugeln oder Polyeder 12 dienen der Verkleinerung des Ölvolumens 11 (grosse thermische Ausdehnung). Der Füllgrad beträgt bei Kugeln 74 Volumen% und bei Würfeln oder anderen raumfüllenden Archimedischen Körpern bis zu 100 Volumen%. Sie können überwiegend gleiche Grösse (z. B. einige mm Durchmesser) haben. Zur Zwickelfüllung können kleinere Kugeln oder Polyeder 12 (z. B. 0,1 mm Durchmesser) vorhanden sein, wobei beim Einfüllen auf eine homogene Durchmischung zu achten ist. Kugeln oder Polyeder 12 verschiedenen Durchmessers können durch unterschiedliche Farben markiert sein. Im Fall von Polyedern 12, insbesondere Würfeln 12, können die Ecken durch Trommelpolieren abgerundet sein. Die Polyeder 12 sind aus Glasschmelze im Pressglasverfahren oder aus Porzellan oder Keramik im Presssinterverfahren herstellbar. Vorzugsweise bestehen sie aus elektrisch isolierenden Gläsern oder feuchtigkeitsabsorbierenden Materialien wie Molekularsieb, Fullererde, Aktivtonerde oder Silikagel.

Zur endseitigen Abdichtung des GFK-Rohrs 9 ist gegebenenfalls eine formschlüssige Kappe 14 auf das GFK-Rohr 9 und die Innenschicht 7b aufgesetzt, wobei die Kappe 14 von der Aussenschicht 7a mit ummantelt ist. Zusätzlich kann auf die ummantelte Kappe 14 ein Metallring 15 aufgesetzt sein. Durch diese Endkonstruktion wird das Eindringen von Wasser durch Kapillarkräfte verhindert. Zudem wird die Aussenschicht 7a von aussen fixiert.

Mit Vorteil weist die Kappe 14 einen konischen Innenwinkel α und einen konischen Aussenwinkel β auf und ist das GFK-Rohr 9 endseitig aussen unter dem Winkel α konisch verjüngt. Der Metallring 15 kann innen unter dem Winkel β konisch verjüngt sein. Die Winkel betragen beispielsweise grössenordnungsmässig α ca. 5° und β ca. 0.6°. Vorzugsweise sind die Kappe 14 geklebt und der Metallring 15 aufgeschrumpft. Durch die konische Bauweise wird ein optimaler Sitz der Kappe 14 und des Metallrings 15 erreicht.

In dem Ausführungsbeispiel gemäss Fig. 1 ist die Messsonde 5 stabförmig und weist entlang einer Sondenachse A angeordnete Elektroden 6 auf. Alternativ oder ergänzend kann eine Gegenelektrode für die stabförmige Messsonde 5 durch eine Behälterwand 2a oder eine vorzugsweise langgestreckte Hilfselektrode gegeben sein. Zur Eliminierung der Verfälschung von Kapazitätssignalen durch isolierende Schmutzfilme können die Elektroden 6 unterschiedliche Dicken der Abdeckung 7 aufweisen. Beispielsweise haben benachbarte Elektroden 6 unterschiedliche Dicken und übernächst benachbarte Elektroden 6 gleiche Dicken der Abdeckung 7. Dies kann durch Zurückversetzen von Elektroden 6 und/oder durch Zusatzlagen der Innenschicht 7b auf gewissen Elektroden 6 oder anderweitig realisiert sein.

Insgesamt soll die dielektrische Abdeckung 7 eine Dicke von ca. 1-3 mm und eine Dielektrizitätszahl zwischen 2 und 7 aufweisen, um den Einfluss der Abdeckung 7 auf die Kapazitätsmesssignale klein zu halten.

Desweiteren hat die Erfindung ein Verfahren zur Füllstandsmessung mit dem oben beschriebenen kapazitiven Füllstandssensor 1 zum Gegenstand. Dabei wird mit dem Kapazitätssensor 1, umfassend eine Messsonde 5 und eine Messelektronik 8, ein vertikales Profil der Dielektrizitätszahl und/oder der elektrischen Leitfähigkeit des Füllguts 3, 4 gemessen und aus dem Profil die Position mindestens einer Grenzschicht 34 bestimmt.

### BEZUGSZEICHENLISTE

- 1: kapazitivern Füllstandssensor
- 2: Behälter, Separatortank
- 2a: Behälterwand, Separatortankwand
- 3, 4: Füllgut, Medium
- 3: Öl
- 4: Wasser
- 34: Grenzschicht, Füllstand
- 5: Messsonde, stabförmige Sonde
- 6: Elektroden, Ringelektroden
- 7: elektrisch isolierende Elektroden-Abdeckung(en)
- 7a: Aussenschicht, FEP-Schrumpfschlauch
- 7b: Innenschicht
- 70: Glimmer
- 71: Glasfaser
- 72: Epoxidharz
- 8: Messelektronik
- 9: GFK-Rohr
- 10: Druckausgleichsvolumen
- 11: Öl, Silikonöl
- 12: Glaskugeln, Glaspolyeder, Raumfüllkörper
- 13: Faltenbalg
- 14: Endkappe
- 15: Metallring

- FEP: Tetrafluoräthylen-Hexafluorpropylen Copolymer
- α: konischer Innenwinkel
- β: konischer Aussenwinkel

## Patentansprüche

1. Kapazitiver Füllstandssensor (1), insbesondere geeignet zur Ortsbestimmung einer Grenzschicht (34) zwischen Wasser (3) und Öl (4) in einem Separatortank (2), umfassend eine Messsonde (5) mit einer Elektrode (6) oder einer Elektrodenanordnung (6), wobei die Messsonde (5) wenigstens teilweise mit einer elektrisch isolierenden Abdeckung (7) versehen ist, dadurch gekennzeichnet, dass die Abdeckung (7) mindestens eine Aussenschicht (7a) aus einem fluorierten Kunststoff und mindestens eine Innenschicht (7b) aus einem glimmerenthaltenden Kunststoff umfasst.

2. Kapazitiver Füllstandssensor (1) nach Anspruch 1, dadurch gekennzeichnet, dass
a) die Aussenschicht (7a) ein thermoplastischer Kunststoff ist, der auf die Messsonde (5) aufgeschrumpft oder aufextrudiert ist und
b) insbesondere dass die Aussenschicht (7a) aus einem Perfluorethylen-Perfluorpropylen Copolymer (FEP) besteht.

3. Kapazitiver Füllstandssensor (1) nach einem der Ansprüche 1-2, dadurch gekennzeichnet, dass
a) die Innenschicht (7b) eine Glasfaserverstärkung enthält,
b) insbesondere dass die Innenschicht (7b) 15%-20% Glasfaser (71), 50%-60% Glimmerpapier (70) und 20%-35% Epoxidharz (72) enthält und
c) insbesondere dass das Epoxidharz (72) ein wasserfrei gehärtetes cykloaliphatisches Epoxidharz (72) ist.

4. Kapazitiver Füllstandssensor (1) nach einem der Ansprüche 1-3, dadurch gekennzeichnet, dass
a) die Innenschicht (7b) aus einem glimmerbeschichteten Glasfaserband besteht, das auf die Messsonde (5) in einer oder mehreren Lagen aufgewickelt ist,
b) die Innenschicht (7b) mit Epoxidharz (72) imprägniert, vorzugsweise vakuumvergossen oder druckvergossen, und gehärtet ist und
c) insbesondere dass die Innenschicht (7b) von aussen silanisiert ist.

5. Kapazitiver Füllstandssensor (1) nach einem der Ansprüche 1-4, dadurch gekennzeichnet, dass
a) die Messsonde (5) ein GFK-Rohr (9) mit aussen aufgebrachten Elektroden (6) und mit einem inneren Druckausgleichsvolumen (10) umfasst,
b) das Druckausgleichsvolumen (10) mit Kugeln/ Polyedern (12) und/oder einem Innenstab, vorzugsweise aus AlMgSi-gefülltem Epoxidharz oder einer Glaskeramik, und/oder Öl (11) gefüllt ist und
c) insbesondere dass endseitig am GFK-Rohr (9) ein Faltenbalg (13) angebracht ist.

6. Kapazitiver Füllstandssensor (1) nach Anspruch 5, dadurch gekennzeichnet, dass
a) die Kugeln/Polyeder (12) aus Glas, Molekularsieb, Fullererde, Aktivtonerde oder Silikagel bestehen und überwiegend gleiche Grösse haben,
b) insbesondere dass zur Zwickelfüllung kleinere Kugeln (12) vorhanden sind und
c) insbesondere dass ölbeständige, für einen hohen Volumenfüllgrad geeignete Archimedische Füllkörper (12) verwendet werden.

7. Kapazitiver Füllstandssensor (1) nach einem der Ansprüche 5-6, dadurch gekennzeichnet, dass
a) eine formschlüssige Kappe (14) zur Abdichtung endseitig auf das GFK-Rohr (9) und die Innenschicht (7b) aufgesetzt ist,
b) die Kappe (14) von der Aussenschicht (7a) mit ummantelt ist und
c) insbesondere dass auf die ummantelte Kappe (14) ein Metallring (15) aufgesetzt ist.

8. Kapazitiver Füllstandssensor (1) nach Anspruch 7, dadurch gekennzeichnet, dass
a) die Kappe (14) einen konischen Innenwinkel a und einen konischen Aussenwinkel β aufweist,
b) das GFK-Rohr (9) endseitig aussen unter dem Winkel α konisch verjüngt ist,
c) insbesondere dass der Metallring (15) innen unter dem Winkel β konisch verjüngt ist und
d) insbesondere dass die Kappe (14) geklebt und der Metallring (15) aufgeschrumpft ist.

9. Kapazitiver Füllstandssensor (1) nach einem der Ansprüche 1-8, dadurch gekennzeichnet, dass
a) die Messsonde (5) stabförmig ist und entlang einer Sondenachse (A) angeordnete Elektroden (6) aufweist und
b) insbesondere dass die Elektroden (6) unterschiedliche Dicken der Abdeckung (7) aufweisen.

10. Verfahren zur Füllstandsmessung mit einem kapazitiven Füllstandssensor (1) gemäss einem der Ansprüche 1-9, dadurch gekennzeichnet, dass
a) mit dem Kapazitätssensor (1) ein vertikales Profil der Dielektrizitätszahl und/oder der elektrischen Leitfähigkeit des Füllguts (3, 4) gemessen wird und
b) aus dem Profil die Position mindestens einer Grenzschicht (34) bestimmt wird.
